# FASCICULE DE BREVET EUROPEEN

(11) **EP 3 785 486 B1**
(45) Date de publication et mention de la délivrance du brevet: **26.11.2025**
(21) Numéro de dépôt: 19720997.6
(22) Date de dépôt: 09.04.2019
(51) Int. Cl.: H04L 65/1083, H04M 3/424, H04W 76/19

(54) **PROCÉDÉ ET SYSTÈME DE DÉTECTION D'INTERRUPTION DE COM-MUNICATIONS ET DE RÉTABLISSEMENT AUTOMATIQUE DES COMMUNICATIONS**
VERFAHREN UND SYSTEM ZUR DETEKTION DER UNTERBRECHUNG VON KOMMUNIKATIONEN UND ZUR AUTOMATISCHEN WIEDERHERSTELLUNG DER KOMMUNIKATIONEN
METHOD AND SYSTEM FOR DETECTING INTERRUPTION OF COMMUNICATIONS AND FOR AUTOMATICALLY RE-ESTABLISHING THE COMMUNICATIONS

(30) Priorité: 24.04.2018 FR 1853592
(43) Date de publication de la demande: 03.03.2021
(73) Titulaire: Orange, 92130 Issy-les-Moulineaux (FR)
(72) Inventeur: BRUN, Arnaud, 92326 CHÂTILLON CEDEX (FR); KIRSCHBAUM, Patrick, 92326 CHÂTILLON CEDEX (FR)
(74) Mandataire: Plasseraud IP
(86) Numéro de dépôt international: PCT/FR2019/050826
(87) Numéro de publication internationale: WO 2019/207229

(56) Documents cités:
- US-A1- 2006 203 738
- US-A1- 2008 037 746
- US-A1- 2008 081 627
- US-A1- 2016 065 733

## Description

L'invention relève du domaine de la gestion de communication.

Des services de rappels automatiques existent sur le réseau fixe. De tels services permettent de recontacter automatiquement et ultérieurement un correspondant appelé dont la ligne est occupée. Ce type de fonctionnalité est notamment disponible dans certains autocommutateurs téléphoniques privés, généralement utilisé dans les entreprises, par exemple connues sous le sigle de PABX pour « *Private Automatic Branch Exchange ».*

Ainsi, lorsqu'un utilisateur A appelle un utilisateur B et que B est déjà en communication, l'utilisateur A a la possibilité d'activer une fonction de rappel automatique (par exemple via une touche de son terminal). Lorsque l'utilisateur B est à nouveau joignable, les deux utilisateurs sont automatiquement rappelés afin d'être mis en communication l'un avec l'autre.

Cependant, de tels systèmes ne permettent pas de rétablir une communication interrompue entre deux terminaux. Les documents US 2016/065733 A1, US 2006/203738 A1, US 2008/037746 A1 et US 2008/081627 A1 traitent d'une problématique similaire. Par exemple, si une communication est interrompue involontairement, les utilisateurs peuvent en ignorer la raison. Plusieurs situations peuvent se présenter, dont aucune n'est satisfaisante pour les utilisateurs :
- chacun des deux correspondants attend que l'autre appelle à nouveau ;
- les deux correspondants essaient, tous les deux en même temps, d'appeler à nouveau. Chacun de leurs appels risque alors d'être renvoyé vers la messagerie vocale de l'appelé (renvoi sur messagerie pour cause de ligne occupée) ;
- un premier des utilisateurs est injoignable car déconnecté du réseau (perte de réseau, épuisement de batterie, etc.). Le second des utilisateurs tente d'appeler à nouveau le premier sans y parvenir.

L'invention vient améliorer la situation.

Il est proposé un procédé d'alerte d'interruption d'une session de communication mis en œuvre par un dispositif d'alerte d'un premier terminal de communication selon la revendication 1, un terminal de communication selon la revendication 7, un procédé de gestion de communication selon la revendication 8, un dispositif de gestion de communication selon la revendication 13. Les revendications dépendantes décrivent des modes de réalisation préférés de l'invention.

Selon un exemple, le procédé d'alerte comprend :
une émission, suite à une interruption d'une première session de communication entre le premier terminal de communication et un deuxième terminal de communication, d'une information d'interruption de la première session de communication entre le premier terminal de communication et le deuxième terminal de communication à destination d'un dispositif de gestion de communication, l'information émise d'interruption de la première session de communication comprenant une commande de rétablissement de la première session de communication entre le premier terminal de communication et le deuxième terminal de communication.

Un tel procédé rend certaines actions des utilisateurs superflues. Notamment, les utilisateurs n'ont plus besoin de composer à nouveau le numéro de leur interlocuteur ou de réitérer aléatoirement les tentatives d'appel jusqu'à ce que l'interlocuteur soit à nouveau joignable. De plus, avantageusement, il est inutile pour les utilisateurs de connaitre la cause de l'interruption de la communication. Ce procédé permet donc de simplifier l'utilisation des moyens de communication en palliant les interruptions accidentelles de communication. Par ailleurs, le gain de temps pour l'utilisateur est important.

Selon un exemple, le terminal de communication, dit premier terminal de communication, comporte un dispositif d'alerte d'interruption d'une session de communication apte à émettre, suite à une interruption d'une première session de communication entre le premier terminal de communication et un deuxième terminal de communication, une information d'interruption de la première session de communication entre le premier terminal de communication et un le deuxième terminal de communication à destination d'un dispositif de gestion de communication, l'information émise d'interruption de la première session de communication comprenant une commande de rétablissement de la première session de communication entre le premier terminal de communication et le deuxième terminal de communication.

Selon un exemple, le procédé de gestion de communication comprend :
suite à une réception, par le dispositif de gestion de communication, d'une information d'interruption d'une session de communication entre un premier terminal de communication et un deuxième terminal de communication, une émission d'une requête d'établissement d'une deuxième session de communication à destination du deuxième terminal de communication déclenchée par l'information reçue d'interruption de la première session de communication, l'information reçue d'interruption de la première session de communication comprenant une commande de rétablissement de la première session de communication entre le premier terminal de communication et le deuxième terminal de communication..

Selon un exemple, le dispositif de gestion de communication comporte un requêteur apte à émettre une requête d'établissement d'une deuxième session de communication à destination du deuxième terminal de communication déclenchée par une information d'interruption d'une première session de communication entre un premier terminal de communication et un deuxième terminal de communication, l'information d'interruption ayant été reçue par le dispositif de gestion de communication en provenance du premier terminal de communication.

Selon un autre aspect de l'invention, il est proposé un programme informatique comportant des instructions pour la mise en œuvre d'un des procédés tel que défini dans les présentes lorsque ce programme est exécuté par un processeur. Selon un autre aspect de l'invention, il est proposé un support d'enregistrement non transitoire, lisible par un ordinateur, sur lequel est enregistré un tel programme.

Les caractéristiques suivantes peuvent, optionnellement, être mises en œuvre. Elles peuvent être mises en œuvre indépendamment les unes des autres ou en combinaison les unes avec les autres :
- L'information émise d'interruption d'une session de communication comprend un premier identifiant associé au premier terminal de communication et un deuxième identifiant associé au deuxième terminal. Cela permet de transmettre les identifiants des deux terminaux participants à la session de communication interrompue avec l'information d'interruption de session de communication.
- Le procédé d'alerte comprend une détection d'une interruption d'une première session de communication entre le premier terminal de communication et le deuxième terminal de communication. Cela permet à un utilisateur d'indiquer que la clôture de la communication est due à une interruption. Il n'a pas besoin de renouveler sa demande car cela est fait automatiquement par le dispositif de gestion de communication jusqu'à rétablissement de la communication.
- Le procédé de gestion de communication comprend, en cas d'échec d'établissement de la deuxième session de communication entre le dispositif de gestion de communication et le deuxième terminal de communication, réitérer l'étape d'émission d'une requête d'établissement d'une deuxième session de communication à destination du deuxième terminal de communication. Cela permet d'automatiser la réitération des requêtes.
- Le procédé de gestion de communication comprend, à l'établissement de la deuxième session de communication entre le dispositif de gestion de communication et le deuxième terminal de communication, émettre une requête d'établissement d'une troisième session de communication avec le premier terminal de communication déclenchant, à l'établissement de la troisième session de communication entre le dispositif de gestion de communication et le premier terminal de communication, un établissement d'une nouvelle première session de communication entre le premier terminal et le deuxième terminal en raboutant la deuxième session de communication et la troisième session de communication établies. Cela permet de rétablir la communication entre le premier terminal et le deuxième terminal suite à la demande de communication.
- Le procédé de gestion de communication comprend, suite à l'établissement de la troisième session de communication entre le dispositif de gestion de communication et le premier terminal de communication, un établissement d'une nouvelle première session de communication entre le premier terminal et le deuxième terminal en raboutant la deuxième session de communication et la troisième session de communication établies. Cela permet de rétablir la communication entre le premier terminal et le deuxième terminal suite à la demande de communication.
- Dans le procédé de gestion de communication, la réception par le dispositif de gestion de communication d'une information d'interruption d'une première session de communication entre le premier terminal de communication et le deuxième terminal de communication est réalisée par l'intermédiaire d'un réseau d'échange de données. Cela permet de prévoir la nature des échanges contenant les informations.
- Dans le procédé de gestion de communication, les premières sessions de communications entre le premier terminal de communication et le deuxième terminal de communication sont des communications vidéo.

D'autres caractéristiques, détails et avantages de l'invention apparaîtront à la lecture de la description détaillée ci-après, et à l'analyse des dessins annexés, sur lesquels :
- la **Figure 1** illustre un système comprenant un premier et un deuxième terminal de communication ainsi qu'une plateforme de gestion de communication selon l'invention ;
- la **Figure 2** illustre un procédé d'établissement d'une communication depuis un premier terminal de communication à destination d'un deuxième terminal de communication mis en œuvre par une plateforme de gestion de communication selon l'invention ; et
- la **Figure 3** illustre un procédé d'établissement d'une communication depuis un premier terminal de communication à destination d'un deuxième terminal de communication mis en œuvre par le premier terminal de communication selon l'invention;

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Dans la suite on désigne de manière générale le réseau de communication entre deux terminaux par les termes « réseau de communication», sans distinguer s'il s'agit d'un réseau de communication de téléphonie fixe, de téléphonie mobile ou d'une combinaison de plusieurs types de réseaux. Un réseau de communication de téléphonie fixe et un réseau de communication de téléphonie mobile peuvent ainsi être vus comme des sous-ensembles, ou des parties, du réseau de communication.

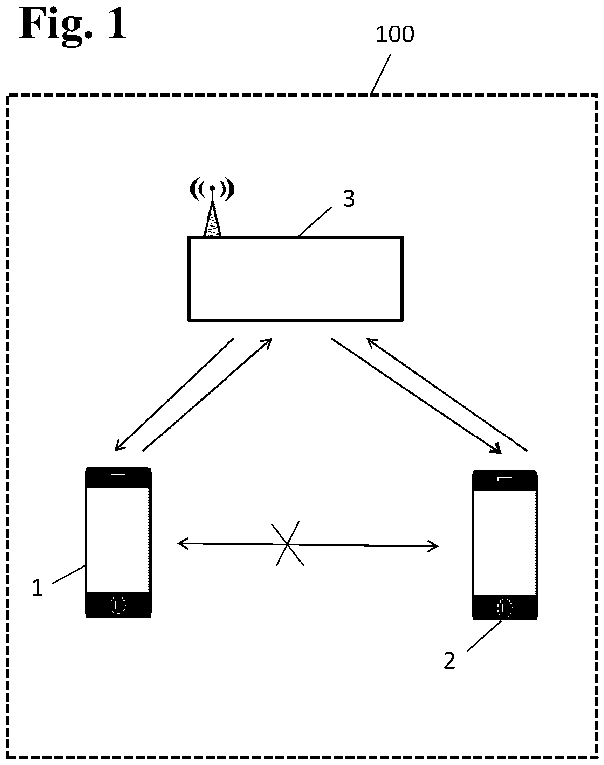

La **Figure 1** illustre un système 100. Le système 100 comprend un premier terminal de communication 1 (ou TC1), un deuxième terminal de communication 2 (ou TC2) et un dispositif de gestion de communication 3, notamment, constituant ou implémenté dans une plateforme de gestion de communication 3 (ou PGC 3) tel qu'illustré par la figure 1. Le premier terminal de communication 1 et le deuxième terminal de communication 2 sont des terminaux de communication distincts.

De manière alternative (non illustré), le dispositif de gestion de communication 3 peut être implémenté dans le premier terminal de communication.

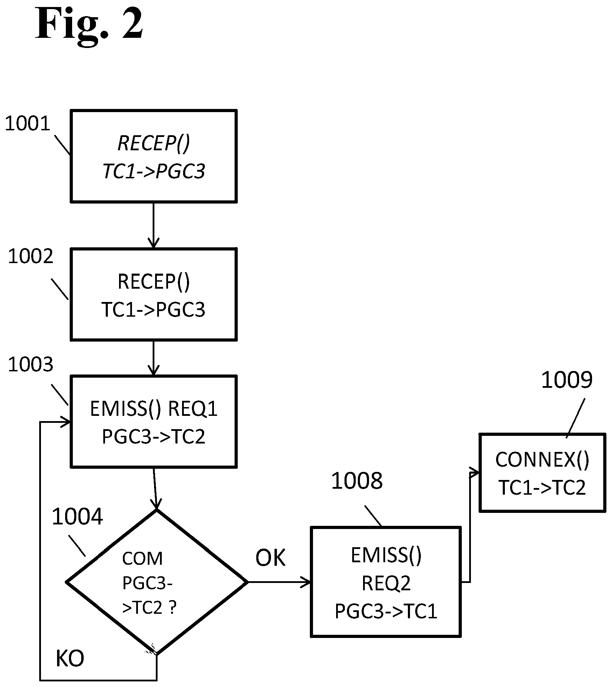

La **Figure 1** représente le système 100 à un instant t. Cet instant correspond à la période entre la fin de l'étape 1008 et le début de l'étape 1009 de la **Figure 2** décrite en détail ci-après.

Dans l'exemple présenté ici, l'un au moins des premier terminal de communication 1 et deuxième terminal de communication 2 est un téléphone mobile. L'un au moins des premier terminal de communication 1 et deuxième terminal de communication 2 est par exemple un téléphone multifonctions (plus connu sous le terme anglophone *« smartphone* »)*.* Au moins un des premier terminal de communication 1 et deuxième terminal de communication 2 loge une carte SIM (acronyme anglophone pour « *Subscriber Identity Module* ») associée à un identifiant d'abonné IMSI (acronyme anglophone pour « *International Mobile Subscriber Identity* »). Un identifiant d'abonné IMSI permet d'identifier un terminal de communication dans le réseau de communication auquel se connecte le terminal de communication. L'identifiant d'abonné IMSI est dit « privé » au sens qu'il est utilisé essentiellement par les gestionnaires des réseaux de communication pour identifier et localiser les terminaux de communication sur le réseau de communication et pour le bon routage des communications, sans être généralement connu des utilisateurs.

En variante, le premier terminal de communication 1 et/ou le deuxième terminal de communication 2 sont des téléphones fixes. Un tel terminal de communication peut être dépourvu de carte SIM et d'identifiant d'abonné IMSI.

Il existe en outre un identifiant d'appel MSISDN (acronyme anglophone pour *« Mobile Station International Subscriber Directory Number* »). L'identifiant d'appel MSISDN est quant à lui généralement attribué par un fournisseur de service à un terminal de communication souscripteur au service, qu'il s'agisse de téléphonie fixe ou mobile. Il est dit « public » au sens qu'il est généralement connu des utilisateurs et correspond à ce que l'on nomme communément un « numéro de téléphone ».

Le fournisseur de service d'une ligne de téléphonie mobile tient à jour une table de correspondance entre identifiants d'appel MSISDN et identifiants d'abonné IMSI. Le fournisseur de service d'une ligne de téléphonie fixe tient à jour une table de correspondance entre identifiants d'appel MSISDN et un point de terminaison du réseau de téléphonie fixe (géographiquement connu). En fonctionnement normal, une session de communication est initiée par le terminal de communication appelant, dit premier terminal de communication, en fournissant à son fournisseur de service un identifiant d'appel MSISDN, dit deuxième identifiant, du terminal de communication de l'utilisateur, dit deuxième terminal de communication. Puis, lorsque le deuxième identifiant MSISDN correspond à une ligne de téléphonie mobile, le fournisseur de service de l'appelant identifie au moins un deuxième identifiant d'abonné IMSI correspondant pour router la session de communication jusqu'au terminal de communication mobile appelé. Ce fonctionnement est généralement transparent pour les utilisateurs qui ignorent leurs identifiants d'abonnés IMSI respectifs. Lorsque le deuxième identifiant d'appel MSISDN correspond à une ligne de téléphonie fixe, le fournisseur de service de l'appelant identifie le point de terminaison d'appel sur le réseau fixe correspondant, c'est-à-dire le deuxième terminal de communication fixe, pour router la session de communication jusqu'au dit deuxième terminal de communication.

Dans la suite de la description, les identifiants d'appel MSISDN du premier terminal de communication 1 et du second terminal de communication 2 sont référencés respectivement, pour le premier identifiant associé au premier terminal de communication, IA1 et, pour le deuxième identifiant associé au deuxième terminal de communication, IA2.

En variante, le premier terminal de communication 1 et/ou le deuxième terminal de communication 2 sont connectés au réseau de communication par l'intermédiaire d'un réseau de communication de téléphonie privé (ou local), par exemple par l'intermédiaire d'un autocommutateur téléphonique privé PABX (acronyme anglophone pour « *Private Automatic Branch eXchange* »)*.* Dans un tel mode de réalisation également, le premier terminal de communication 1 et/ou le deuxième terminal de communication 2 disposent respectivement d'un premier identifiant d'appel IA1, et/ou d'un deuxième identifiant d'appel IA2.

Le dispositif de gestion de communication 3 est agencé pour rétablir une première session de communication entre le premier terminal de communication 1 et le deuxième terminal de communication 2 à la suite d'une interruption de la première session de communication. Par exemple, le dispositif de gestion de communication PGC 3 est une plateforme de communication de téléphonie mobile. Alternativement, le dispositif de gestion de communication PGC 3 est un serveur vocal interactif, prenant en charge les appels entrants à l'aide de messages vocaux enregistrés ou de synthèse vocale. L'appelant interagit avec le serveur par la voix ou des fréquences sonores préétablies générées par l'intermédiaire des touches de son téléphone.

Un procédé de gestion de communication d'une première session de communication téléphonique entre un premier terminal de communication 1 (par exemple TC1) et un deuxième terminal de communication 2 (par exemple TC2) notamment via un dispositif de gestion de communication (par exemple une plateforme de communication PGC3) va maintenant être décrit en référence à la **Figure 2****.**

Typiquement, le contexte de la mise en œuvre du procédé est le suivant : une première session de communication est établie entre un premier terminal de communication 1 et un deuxième terminal de communication 2 sur demande d'un des premier terminal de communication et deuxième terminal de communication. La première session de communication est close bien que l'utilisateur du premier terminal de communication 1 et l'utilisateur du deuxième terminal de communication 2 souhaitent continuer d'échanger : on dit alors que la première session de communication est interrompue car il ne s'agit pas d'une clôture volontaire mais involontaire.

Lors d'une étape 1001, le dispositif de gestion de communication reçoit une information d'interruption de la première session de communication entre le premier terminal de communication 1 et le deuxième terminal de communication 2. Dans les cas où l'un au moins un des premier terminal de communication 1 et deuxième terminal de communication 2 reste connecté à un réseau de communication, l'information d'interruption de la première session de communication peut être émise depuis l'un au moins des premier terminal de communication 1 et deuxième terminal de communication 2. Dans l'exemple décrit ici, il est considéré que le deuxième terminal de communication 2 est momentanément déconnecté du réseau. Par conséquent, l'information d'interruption de la première session de communication est émise depuis le premier terminal de communication 1. En variante, l'information d'interruption de communication est émise par le réseau de communication, ou un équipement du réseau de communication utilisé par la première session de communication. Notamment, l'information d'interruption de session de communication peut être incluse dans un message ou une commande émis à destination du dispositif de gestion de communication.

L'émission d'une telle information à l'interruption de la première session de communication peut être automatisée. Par « automatisée », est entendu ici qu'aucune action de la part de l'utilisateur n'est nécessaire pour déclencher l'envoi de l'information d'interruption de la session de communication. L'émission de l'information est déclenchée par un dispositif d'alerte notamment du premier terminal de communication. Par exemple, le dispositif d'alerte met en œuvre un programme informatique préalablement installé dans le dispositif d'alerte ou le terminal implémentant le dispositif d'alerte, souvent appelée « application » dans le cas des téléphones multifonctions. Par exemple, l'information d'interruption d'une session de communication peut être envoyée selon le protocole de transfert hypertexte, plus connu sous l'abréviation « *HTTP ».*

Le dispositif de gestion de communication 3 reçoit un premier identifiant associé au premier terminal de communication 1, et un deuxième identifiant associé au deuxième terminal de communication 2 soit dans ou avec l'information d'interruption de session de communication lors de la première étape 1001, soit lors d'une étape 1002. Notamment, le premier identifiant et le deuxième identifiant sont transmis depuis au moins un des premier terminal de communication 1, et deuxième terminal de communication 2 (du premier terminal de communication 1 dans l'exemple représenté sur les figures). Par exemple, le premier identifiant et le deuxième identifiant transmis correspondent aux identifiants d'abonné et/ou d'appel (IMSI ou MSISDN) IA1 et IA2. En d'autres termes, le dispositif de gestion de communication PGC3 reçoit les numéros de téléphone du premier terminal de communication 1 et du deuxième terminal de communication 2.

La réception d'une information d'interruption de session de communication (étape 1001) et la réception des premier et deuxième identifiants (étape 1002) peuvent être mise en œuvre l'un après l'autre ou même être mise en œuvre simultanément, par exemple en recevant un ensemble de données incluant au moins les deux identifiants IA1 et IA2.

Lors d'une étape 1003, le dispositif de gestion de communication PGC3 émet une requête d'établissement d'une deuxième session de communication REQ1 à destination du deuxième terminal de communication depuis lequel les données relatives à l'interruption de session de communication (notamment, information d'interruption de session de communication et/ou premier et deuxième identifiants) n'ont pas été reçues au cours des étapes précédentes (1001 et/ou 1002). Autrement dit, dans l'exemple, le dispositif de gestion de communication PGC3 a reçu des données du premier terminal de communication TC1 mais pas du deuxième terminal de communication TC2. Le dispositif de gestion de communication PGC3 émet donc la requête d'établissement d'une deuxième session de communication REQ1 à destination du deuxième terminal de communication 2 au moyen du deuxième identifiant IA2 reçu précédemment, notamment lors de l'étape 1002. Dans l'exemple décrit ici, le dispositif de gestion de communication PGC3 requiert l'établissement d'une deuxième session de communication notamment en émettant un appel téléphonique sortant, (mode de réalisation particulier de la première requête d'établissement d'une deuxième session de communication REQ1) à destination du deuxième terminal de communication 2.

Optionnellement, dans le cas où le dispositif de gestion de communication est un serveur vocal interactif, le dispositif de gestion de communication PGC3 établi une session applicative avec le premier terminal de communication et émet un message vocal préenregistré à destination du premier terminal de communication. Ce message vocal indique par exemple à l'utilisateur du premier terminal de communication 1 la marche à suivre pour rétablir la première session communication interrompue avec le deuxième terminal de communication 2. Dans cet exemple, le message vocal peut indiquer à l'utilisateur de rester en ligne et d'attendre la mise en œuvre automatique de la suite du procédé, en l'occurrence l'établissement de la deuxième session de communication entre le dispositif de gestion de communication 3 et le deuxième terminal de communication 2.

En particulier, l'étape 1003 de requête d'établissement de la deuxième session de communication est temporisée, c'est-à-dire que la requête REQ1 n'est pas émise immédiatement après la réception de l'information d'interruption et/ou des premier identifiant et deuxième identifiant lors de l'étape 1001 et/ou de l'étape 1002. Cette réception de l'information d'interruption et/ou des premier identifiant et deuxième identifiant lors de l'étape 1001 et/ou de l'étape 1002 déclenche une temporisation d'une période de temps prédéfinie au terme de laquelle la requête REQ1 d'établissement de la deuxième session de communication est émise.

Lors d'une étape 1004, l'établissement ou le non-établissement de la deuxième session de communication entre le deuxième terminal de communication TC2 et le dispositif de gestion de communication PGC3 est vérifiée. Si le deuxième terminal de communication 2 a reçu la requête REQ1 d'établissement d'une deuxième session de communication avec le dispositif de gestion de communication 3 et si le deuxième terminal de communication 2 est prêt à établir la deuxième session de communication, la deuxième session de communication entre le deuxième terminal de communication 2 et le dispositif de gestion de communication 3 est établie, notamment l'ouverture d'un canal de communication entre le deuxième terminal de communication 2 et le dispositif de gestion de communication PGC3 est générée.

Si le dispositif de gestion de communication 3 n'est pas implémenté dans le premier terminal de communication 1 : par exemple, si le dispositif de gestion de communication 3 est implémenté dans une plateforme de gestion de communication PG3, l'étape suivante 1008 est mise en œuvre.

Dans le cas où la deuxième session de communication n'est pas établie (par exemple en cas de non réception de la requête REQ1 et/ou impossibilité pour le deuxième terminal de communication 2 d'établir une session de communication), un échec d'établissement de la deuxième session de communication entre le dispositif de gestion de communication PGC3 et le deuxième terminal de communication 2 est constaté. Le constat d'échec d'établissement de la deuxième session de communication déclenche la réitération de l'étape 1003 de requête en établissement d'une deuxième session de communication. Optionnellement, dans le cas où le dispositif de gestion de communication est un serveur vocal interactif, le dispositif de gestion de communication PGC3 émet un message vocal préenregistré à destination du deuxième terminal de communication 2. Par exemple, le message vocal demande à l'utilisateur du deuxième terminal de communication de patienter jusqu'à rétablissement de la première session de communication entre le deuxième terminal de communication et le premier terminal de communication.

Le déclenchement de la réitération à l'étape 1004 peut être temporisée (en cas d'échec d'établissement de la deuxième session de communication entre le dispositif de gestion de communication PGC3 et le deuxième terminal de communication 2). Par exemple, chaque itération est espacée de la précédente et de la suivante d'une période préétablie. Ladite période peut être paramétrable. Typiquement cette période équivaut à 30 secondes. Ainsi, le renouvellement de la requête d'établissement de la deuxième session de communication, implémenté par exemple sous la forme d'une tentative de rappel du deuxième terminal de communication 2, est réitéré toutes les 30 secondes jusqu'à établissement de la deuxième session de communication. En outre, au moins une limite maximale peut être fixée, en nombre d'itérations et/ou en temps, avant que le procédé de gestion de communication soit interrompu en cas d'échec répété.

Lors de l'étape 1008, suite à l'établissement de la deuxième session de communication entre le dispositif de gestion de communication 3 et le deuxième terminal de communication 2, le dispositif de gestion de communication PGC3 émet une requête REQ2 d'établissement d'une troisième session de communication à destination du premier terminal de communication depuis lequel des données relatives à l'interruption de session de communication ont été reçues au cours des étapes précédentes (1001 et/ou 1002). Par exemple, la requête REQ2 d'établissement d'une troisième session de communication peut être implémentée sous la forme d'une émission par le dispositif de gestion de communication PGC3 d'un appel téléphonique sortant à destination du premier terminal de communication 1.

Dans l'exemple illustré par la figure 2, si la troisième session de communication entre le dispositif de communication PGC3 et le premier terminal de communication 1 n'est pas établie, le dispositif de communication PGC3 ne réitère pas la requête d'établissement de la troisième session de communication REQ2 à destination du premier terminal de communication 1.

De manière alternative (non illustrée), dans le cas où la troisième session de communication n'est pas établie (par exemple en cas de non réception de la requête REQ2 et/ou impossibilité pour le premier terminal de communication 1 d'établir une session de communication), un échec d'établissement de la troisième session de communication entre le dispositif de gestion de communication PGC3 et le premier terminal de communication 1 est constaté. Le constat d'échec d'établissement de la deuxième session de communication déclenche la réitération de l'étape 1008 de requête en établissement d'une troisième session de communication.

Le déclenchement de la réitération de l'émission de la requête d'établissement d'une troisième session de communication peut être temporisé (en cas d'échec d'établissement de la deuxième session de communication entre le dispositif de gestion de communication PGC3 et le deuxième terminal de communication 2). Par exemple, chaque itération est espacée de la précédente et de la suivante d'une période préétablie. Ladite période peut être paramétrable. Typiquement cette période équivaut à 30 secondes. Ainsi, le renouvellement de la requête d'établissement de la deuxième session de communication, implémenté par exemple sous la forme d'une tentative de rappel du deuxième terminal de communication 2, est réitérée toutes les 30 secondes jusqu'à établissement de la deuxième session de communication. En outre, au moins une limite maximale peut être fixée, en nombre d'itérations et/ou en temps, avant que le procédé de gestion de communication soit interrompu en cas d'échec répété.

Optionnellement, suite à l'échec d'établissement de la troisième session de communication, dans le cas où le dispositif de gestion de communication est un serveur vocal interactif, le dispositif de gestion de communication PGC3 émet un message vocal à destination du deuxième terminal de communication 2 avant d'interrompre la deuxième session de communication. Par exemple, le message vocal indique à l'utilisateur du deuxième terminal de communication 2 que le premier terminal de communication 1 est injoignable.

Lors d'une étape 1009, soit suite à l'établissement de la troisième session de communication entre le dispositif de gestion de communication 3 et le premier terminal de communication 1, le dispositif de gestion de communication PGC met en communication le premier terminal 1 et le deuxième terminal 2 l'un avec l'autre en rétablissant la première session de communication à partir des deuxième session de communication et troisième session de communication établies. Optionnellement, la mise en œuvre de ladite communication, c'est-à-dire l'établissement de la nouvelle première session de communication, aussi appelé rétablissement de la première session de communication, est réalisée par aboutement de la troisième session de communication (entre le dispositif de communication 3 et le premier terminal de communication 1) et la deuxième session de communication (entre le dispositif de gestion de communication 3 et le deuxième terminal de communication 2). Ainsi, la première session de communication initialement interrompue entre le premier terminal de communication TC1 et le deuxième terminal de communication TC2 est alors rétablie.

Alternativement, un équipement appartenant au réseau, et distinct des premier terminal 1, deuxième terminal 2 et de la plateforme 3, pilote la mise en communication des premier terminal 1 et deuxième terminal 2 l'un avec l'autre, c'est-à-dire l'établissement de la première session de communication.

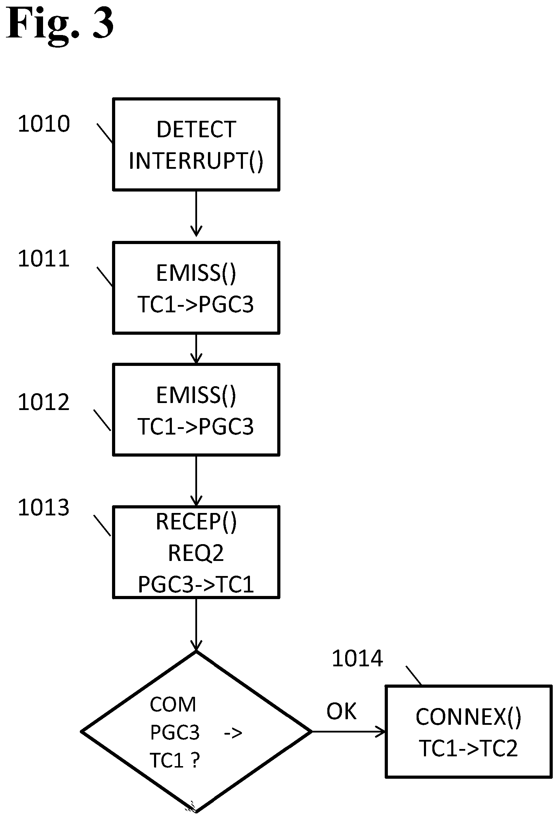

Un procédé d'alerte mis en œuvre par un dispositif d'alerte d'un premier terminal de communication 1 va maintenant être décrit en référence à la **Figure 3****.** Les références TC1, TC2 et PGC3 décrivent des organes respectivement similaires à ceux de la **Figure 1****.**

Typiquement, le contexte de la mise en œuvre du procédé d'alerte est le suivant : une première session de communication est établie entre un premier terminal de communication 1 et un deuxième terminal de communication 2. Quelle qu'en soit la raison, la première session de communication est interrompue: la communication est coupée involontairement de la part de l'un au moins des utilisateurs. Comme expliqué précédemment, au moins un des premier terminal de communication 1, et deuxième terminal de communication 2 est associé à un identifiant d'appel IA1, respectivement IA2, qui correspond à l'identifiant d'appel MSISDN.

En particulier, lors d'une étape 1010, le premier terminal de communication 1 détecte une interruption de la première session de communication entre le premier terminal de communication 1 et le deuxième terminal de communication 2, par exemple dû à une perte de réseau pour le deuxième terminal de communication 2. Optionnellement, cette première session de communication peut être une communication vidéo.

Lors d'une étape 1011, le premier terminal de communication 1 émet une information d'interruption de la première session de communication entre le premier terminal de communication 1 et le deuxième terminal de communication 2, à destination d'un dispositif de gestion de communication PGC3. Notamment, l'information d'interruption est incluse dans un message émis par le premier terminal de communication. L'émission de ladite information d'interruption de communication est réalisée, par exemple, par l'intermédiaire d'un réseau d'échange de données. Optionnellement, ce réseau applique un protocole de communication client-serveur. Par exemple, un protocole de communication client-serveur développé pour le réseau Internet, comme le protocole de transfert hypertexte, plus connu sous l'abréviation « *HTTP ».*

En particulier, le premier terminal de communication 1 transmet un premier identifiant associé au premier terminal de communication 1 et un deuxième identifiant associé au deuxième terminal de communication 2 à destination du dispositif de gestion de communication PGC3, notamment avec et/ou dans l'information d'interruption de l'étape 1011 ou lors d'une étape 1012 illustré par la figure 3. L'émission du premier identifiant et du deuxième identifiant est réalisée, par exemple, par l'intermédiaire d'un réseau d'échange de données, tel qu'en appliquant un protocole « *HTTP ».*

Les données émises relatives à l'interruption de la première session de communication incluent une information d'interruption et/ou un premier identifiant et/ou un deuxième identifiant de l'étape 1011 et/ou de l'étape 1012. Optionnellement, les émissions desdites données sont réalisées conjointement, notamment dans un unique message, une unique commande de rétablissement de la première session de communication ou une unique requête de rétablissement de la première session de communication. Alternativement, les étapes 1011 et 1012 sont réalisées consécutivement. Par exemple, l'étape 1011 se réalise préalablement à l'étape 1012 ou inversement.

En particulier, lorsque le dispositif de gestion de communication n'est pas implémenté dans le premier terminal de communication, lors d'une étape 1013, le premier terminal de communication 1 reçoit une requête de communication REQ2 d'établissement d'une troisième session de communication provenant du dispositif de gestion de communication PGC3. Par exemple, le premier terminal de communication 1 reçoit un appel téléphonique, qui correspond à un mode de réalisation de la requête REQ2 d'établissement de la troisième session de communication, provenant du dispositif de gestion de communication PGC3. La requête REQ2 d'établissement d'une troisième session de communication correspond, par exemple, à la requête REQ2 d'établissement d'une troisième session de communication de la figure 2 décrite ci-avant.

En particulier, lors d'une étape 1014, soit à l'établissement de la troisième session de communication entre le dispositif de gestion de communication PGC3 et le premier terminal de communication 1, une nouvelle première session de communication entre le premier terminal de communication 1 et le deuxième terminal de communication 2 est établie. En d'autres termes, la première session de communication entre le premier terminal de communication 1 et le deuxième terminal de communication 2 est rétablie.

Pour faciliter la compréhension, il a été considéré jusqu'ici une session de communication entre seulement deux terminaux. En variante, les procédés sont mis en œuvre pour rétablir des sessions de communication à plus de deux terminaux, ou « mode conférence ». Dans ces cas, les étapes relatives au deuxième terminal de communication sont reproduites pour au moins un troisième terminal de communication de manière similaire.

Jusqu' ici les procédés ont été décrits comme étant mis en œuvre par des dispositifs, respectivement dispositif de gestion de communication et dispositif d'alerte, ils peuvent aussi être mis en œuvre par un processeur, ou de manière générale par un dispositif informatique tel qu'un téléphone multifonctions. Bien entendu, les procédés peuvent aussi être vus comme mis en œuvre par un programme informatique.

L'invention ne se limite pas aux exemples de procédé et programme informatique décrits ci-avant, seulement à titre d'exemple, mais elle englobe toutes les variantes que pourra envisager l'homme de l'art dans le cadre de la protection obtenue telle que définie par les revendications.

## Revendications

1. Procédé d'alerte d'interruption d'une session de communication mis en œuvre par un dispositif d'alerte compris dans un premier terminal de communication (1), le procédé d'alerte comprenant :
une émission (1011), lors d'une interruption d'une première session de communication entre le premier terminal de communication et un deuxième terminal de communication, d'une information d'interruption relative à l'interruption de la première session de communication entre le premier terminal de communication (1) et le deuxième terminal de communication (2) à destination d'un dispositif de gestion de communication (3) distinct du premier terminal de communication (1) et du deuxième terminal de communication (2), l'information émise d'interruption de la première session de communication comprenant une commande de rétablissement de la première session de communication entre le premier terminal de communication et le deuxième terminal de communication.

2. Procédé d'alerte selon la revendication 1, dans lequel l'information émise d'interruption de la première session de communication comprend un premier identifiant associé au premier terminal de communication et un deuxième identifiant associé au deuxième terminal.

3. Procédé d'alerte selon l'une des revendications précédentes, comprenant une détection d'une interruption d'une première session de communication entre le premier terminal de communication et le deuxième terminal de communication.

4. Procédé d'alerte selon l'une des revendications précédentes comprenant en outre :
une réception, suite à l'information d'interruption émise, d'au moins un message relatif à une mise en œuvre d'un processus de rétablissement de la première session de communication, en provenance du dispositif de gestion de communication (3).

5. Procédé d'alerte selon la revendication 4, dans lequel ledit message comprend au moins une requête (REQ2) d'établissement d'une autre session de communication entre le dispositif de gestion de communication (3) et le premier terminal de communication (1).

6. Procédé d'alerte selon la revendication 5 comprenant en outre :
une validation de la requête (REQ2) d'établissement de ladite autre session de communication, et
l'établissement, suite à ladite validation, d'une nouvelle première session de communication entre le premier terminal de communication (1) et le deuxième terminal de communication (2).

7. Terminal de communication, dit premier terminal de communication, comportant un dispositif d'alerte d'interruption d'une session de communication apte à émettre (1011), lors d'une interruption d'une première session de communication entre le premier terminal de communication et un deuxième terminal de communication, une information d'interruption d'une session de communication relative à l'interruption de la première session de communication entre le premier terminal de communication (1) et le deuxième terminal de communication (2) à destination d'un dispositif de gestion de communication (3) distinct du premier terminal de communication (1) et du deuxième terminal de communication (2), l'information émise d'interruption de la première session de communication comprenant une commande de rétablissement de la première session de communication entre le premier terminal de communication et le deuxième terminal de communication.

8. Procédé de gestion de communication mis en œuvre par un dispositif de gestion de communication (3), le procédé de gestion de communication comprenant :
suite à une réception (1001), par le dispositif de gestion de communication (3), d'une information d'interruption d'une session de communication relative à une interruption d'une première session de communication entre un premier terminal de communication (1) et un deuxième terminal de communication (2) distincts dudit dispositif de gestion de communication (3), ladite information d'interruption étant reçue du premier terminal de communication lors de l'interruption, l'information reçue d'interruption de la première session de communication comprenant une commande de rétablissement de la première session de communication entre le premier terminal de communication et le deuxième terminal de communication,
une émission (1003) d'une requête d'établissement d'une deuxième session de communication (REQ1) à destination du deuxième terminal de communication (2) déclenchée par l'information reçue d'interruption d'une session de communication.

9. Procédé de gestion de communication selon la revendication précédente, comprenant, en cas d'échec d'établissement de la deuxième session de communication entre le dispositif de gestion de communication (3) et le deuxième terminal de communication (2), réitérer (1004) l'étape d'émission (1003) d'une requête d'établissement d'une deuxième session de communication (REQ1) à destination du deuxième terminal de communication (2).

10. Procédé de gestion de communication selon l'une des revendications 8 ou 9, comprenant, à l'établissement de la deuxième session de communication entre le dispositif de gestion de communication (3) et le deuxième terminal de communication (2), émettre (1008) une requête (REQ2) d'établissement d'une troisième session de communication avec le premier terminal de communication (1) déclenchant, à l'établissement de la troisième session de communication entre le dispositif de gestion de communication (3) et le premier terminal de communication (1), un établissement d'une nouvelle première session de communication (1009) entre le premier terminal et le deuxième terminal (1, 2) en raboutant la deuxième session de communication et la troisième session de communication établies.

11. Procédé selon l'une des revendications 8 à 10, dans lequel la réception par le dispositif de gestion de communication (3) d'une information d'interruption d'une première session de communication entre le premier terminal de communication (1) et le deuxième terminal de communication (2) est réalisée par l'intermédiaire d'un réseau d'échange de données.

12. Procédé selon l'une des revendications 8 à 11, dans lequel les premières sessions de communications entre le premier terminal de communication (1) et le deuxième terminal de communication (2) sont des communications vidéo.

13. Dispositif de gestion de communication comportant un requêteur apte à émettre une requête d'établissement d'une deuxième session de communication (REQ1) à destination d'un deuxième terminal de communication (2) déclenchée par une information d'interruption relative à une interruption d'une première session de communication entre un premier terminal de communication (1) et un deuxième terminal de communication (2) et comprenant une commande de rétablissement de la première session de communication, l'information d'interruption ayant été reçue lors de l'interruption par le dispositif de gestion de communication en provenance du premier terminal de communication, ledit dispositif de gestion de communication étant distinct du premier terminal de communication (1) et du deuxième terminal de communication (2).

14. Programme informatique comportant des instructions pour la mise en œuvre du procédé d'alerte selon l'une des revendications 1 à 6 et/ou du procédé de gestion de communication selon l'une des revendications 8 à 12 lorsque ce programme est exécuté par un processeur.

15. Support d'enregistrement non transitoire lisible par un ordinateur sur lequel est enregistré un programme pour la mise en œuvre du procédé d'alerte selon l'une des revendications 1 à 6 et/ou du procédé de gestion de communication selon l'une des revendications 8 à 12 lorsque ce programme est exécuté par un processeur.

## Patentansprüche

1. Verfahren zum Warnen vor einer Unterbrechung einer Kommunikationssitzung, das von einer Warnvorrichtung durchgeführt wird, die in einem ersten Kommunikationsendgerät (1) enthalten ist, wobei das Warnverfahren umfasst:
ein Senden (1011), bei einer Unterbrechung einer ersten Kommunikationssitzung zwischen dem ersten Kommunikationsendgerät und einem zweiten Kommunikationsendgerät, einer Unterbrechungsinformation bezüglich der Unterbrechung der ersten Kommunikationssitzung zwischen dem ersten Kommunikationsendgerät (1) und dem zweiten Kommunikationsendgerät (2) an eine Kommunikationssteuerungsvorrichtung (3), die verschieden von dem erstem Kommunikationsendgerät (1) und von dem zweiten Kommunikationsendgerät (2) ist, wobei die gesendete Unterbrechungsinformation für die erste Kommunikationssitzung einen Befehl zum Wiederherstellen der ersten Kommunikationssitzung zwischen dem ersten Kommunikationsendgerät und dem zweiten Kommunikationsendgerät umfasst.

2. Warnverfahren nach Anspruch 1, wobei die gesendete Unterbrechungsinformation für die erste Kommunikationssitzung eine erste Kennung, die dem ersten Kommunikationsendgerät zugeordnet ist, und eine zweite Kennung, die dem zweiten Endgerät zugeordnet ist, umfasst.

3. Warnverfahren nach einem der vorhergehenden Ansprüche, umfassend eine Erkennung einer Unterbrechung einer ersten Kommunikationssitzung zwischen dem ersten Kommunikationsendgerät und dem zweiten Kommunikationsendgerät.

4. Warnverfahren nach einem der vorhergehenden Ansprüche, umfassend ferner:
ein Empfangen, nach der gesendeten Unterbrechungsinformation, mindestens einer Nachricht bezüglich einer Durchführung eines Vorgangs zur Wiederherstellung der ersten Kommunikationssitzung von der Kommunikationssteuerungsvorrichtung (3).

5. Warnverfahren nach Anspruch 4, wobei die Nachricht mindestens eine Anforderung (REQ2) zum Aufbauen einer anderen Kommunikationssitzung zwischen der Kommunikationssteuerungsvorrichtung (3) und dem ersten Kommunikationsendgerät (1) umfasst.

6. Warnverfahren nach Anspruch 5, umfassend ferner:
eine Validierung der Anforderung (REQ2) zum Aufbauen der anderen Kommunikationssitzung, und
das Aufbauen, nach der Validierung, einer neuen ersten Kommunikationssitzung zwischen dem ersten Kommunikationsendgerät (1) und dem zweiten Kommunikationsendgerät (2).

7. Kommunikationsendgerät, erstes Kommunikationsendgerät genannt, das eine Vorrichtung zum Warnen vor einer Unterbrechung einer Kommunikationssitzung beinhaltet, die in der Lage ist, bei einer Unterbrechung einer ersten Kommunikationssitzung zwischen dem ersten Kommunikationsendgerät und einem zweiten Kommunikationsendgerät eine Unterbrechungsinformation für eine Kommunikationssitzung bezüglich der Unterbrechung der ersten Kommunikationssitzung zwischen dem ersten Kommunikationsendgerät (1) und dem zweiten Kommunikationsendgerät (2) an eine Kommunikationssteuerungsvorrichtung (3) zu senden (1011), die von dem ersten Kommunikationsendgerät (1) und von dem zweiten Kommunikationsendgerät (2) verschieden ist, wobei die gesendete Unterbrechungsinformation für die erste Kommunikationssitzung einen Befehl zum Wiederherstellen der ersten Kommunikationssitzung zwischen dem ersten Kommunikationsendgerät und dem zweiten Kommunikationsendgerät umfasst.

8. Kommunikationssteuerungsverfahren, das von einer Kommunikationssteuerungsvorrichtung (3) durchgeführt wird, wobei das Kommunikationssteuerungsverfahren umfasst:
nach einem Empfangen (1001), durch die Kommunikationssteuerungsvorrichtung (3), einer Unterbrechungsinformation für eine Kommunikationssitzung bezüglich einer Unterbrechung einer ersten Kommunikationssitzung zwischen einem ersten Kommunikationsendgerät (1) und einem zweiten Kommunikationsendgerät (2), die von der Kommunikationssteuerungsvorrichtung (3) verschieden sind, wobei die Unterbrechungsinformation von dem ersten Kommunikationsendgerät bei der Unterbrechung empfangen wird, wobei die empfangene Unterbrechungsinformation für die erste Kommunikationssitzung einen Befehl zum Wiederherstellen der ersten Kommunikationssitzung zwischen dem ersten Kommunikationsendgerät und dem zweiten Kommunikationsendgerät umfasst,
ein Senden (1003) einer Anforderung zum Aufbauen einer zweiten Kommunikationssitzung (REQ1) an das zweite Kommunikationsendgerät (2), die durch die empfangene Unterbrechungsinformation für eine Kommunikationssitzung ausgelöst wird.

9. Kommunikationssteuerungsverfahren nach dem vorhergehenden Anspruch, umfassend, im Fall des Scheiterns des Aufbauens der zweiten Kommunikationssitzung zwischen der Kommunikationssteuerungsvorrichtung (3) und dem zweiten Kommunikationsendgerät (2), das Wiederholen (1004) des Schritts des Sendens (1003) einer Anforderung zum Aufbauen einer zweiten Kommunikationssitzung (REQ1) an das zweite Kommunikationsendgerät (2).

10. Kommunikationssteuerungsverfahren nach einem der Ansprüche 8 oder 9, umfassend, beim Aufbauen der zweiten Kommunikationssitzung zwischen der Kommunikationssteuerungsvorrichtung (3) und dem zweiten Kommunikationsendgerät (2), das Senden (1008) einer Anforderung (REQ2) zum Aufbauen einer dritten Kommunikationssitzung zu dem ersten Kommunikationsendgerät (1), die, beim Aufbauen der dritten Kommunikationssitzung zwischen der Kommunikationssteuerungsvorrichtung (3) und dem ersten Kommunikationsendgerät (1), ein Aufbauen einer neuen ersten Kommunikationssitzung (1009) zwischen dem ersten Endgerät und dem zweiten Endgerät (1, 2) auslöst, indem die aufgebaute zweite Kommunikationssitzung und die aufgebaute dritte Kommunikationssitzung aneinandergefügt werden.

11. Verfahren nach einem der Ansprüche 8 bis 10, wobei das Empfangen, durch die Kommunikationssteuerungsvorrichtung (3), einer Unterbrechungsinformation für eine erste Kommunikationssitzung zwischen dem ersten Kommunikationsendgerät (1) und dem zweiten Kommunikationsendgerät (2) über ein Datenaustauschnetz ausgeführt wird.

12. Verfahren nach einem der Ansprüche 8 bis 11, wobei die ersten Kommunikationssitzungen zwischen dem ersten Kommunikationsendgerät (1) und dem zweiten Kommunikationsendgerät (2) Videokommunikationen sind.

13. Kommunikationssteuerungsvorrichtung, die einen Anforderer beinhaltet, der in der Lage ist, eine Anforderung zum Aufbauen einer zweiten Kommunikationssitzung (REQ1) an ein zweites Kommunikationsendgerät (2) zu senden, die durch eine Unterbrechungsinformation bezüglich einer Unterbrechung einer ersten Kommunikationssitzung zwischen einem ersten Kommunikationsendgerät (1) und einem zweiten Kommunikationsendgerät (2) ausgelöst wird und einen Befehl zum Wiederherstellen der ersten Kommunikationssitzung umfasst, wobei die Unterbrechungsinformation bei der Unterbrechung durch die Kommunikationssteuerungsvorrichtung von dem ersten Kommunikationsendgerät empfangen worden ist, wobei die Kommunikationssteuerungsvorrichtung von dem ersten Kommunikationsendgerät (1) und von dem zweiten Kommunikationsendgerät (2) verschieden ist.

14. Computerprogramm, das Anweisungen beinhaltet, die bei der Ausführung des Programms durch einen Prozessor das Warnverfahren nach einem der Ansprüche 1 bis 6 und/oder das Kommunikationssteuerungsverfahren nach einem der Ansprüche 8 bis 12 durchführen.

15. Computerlesbares nichtflüchtiges Speichermedium, auf dem ein Programm gespeichert ist, das bei der Ausführung dieses Programms durch einen Prozessor das Warnverfahren nach einem der Ansprüche 1 bis 6 und/oder das Kommunikationssteuerungsverfahren nach einem der Ansprüche 8 bis 12 durchführt.

## Claims

1. Method for alerting of interruption of a communication session, said method being implemented by an alerting device included in a first communication terminal (1), the alerting method comprising:
transmission (1011), upon an interruption of a first communication session between the first communication terminal and a second communication terminal, of interruption information relating to the interruption of the first communication session between the first communication terminal (1) and the second communication terminal (2) to a communication management device (3) distinct from the first communication terminal (1) and second communication terminal (2), the transmitted information on interruption of the first communication session comprising a command to restore the first communication session between the first communication terminal and the second communication terminal.

2. Alerting method according to Claim 1, wherein the transmitted information on interruption of the first communication session comprises a first identifier associated with the first communication terminal and a second identifier associated with the second terminal.

3. Alerting method according to any of the preceding claims, comprising detection of an interruption of a first communication session between the first communication terminal and the second communication terminal.

4. Alerting method according to any of the preceding claims, further comprising:
reception, in response to the transmitted interruption information, of at least one message relating to implementation of a process for restoring the first communication session, from the communication management device (3).

5. Alerting method according to Claim 4, wherein said message comprises at least one request (REQ2) to set up another communication session between the communication management device (3) and the first communication terminal (1).

6. Alerting method according to Claim 5, further comprising:
validation of the request (REQ2) to set up said other communication session, and
set up, in response to said validation, of a new first communication session between the first communication terminal (1) and the second communication terminal (2).

7. Communication terminal, called first communication terminal, comprising a device for alerting of interruption of a communication session, capable of transmitting (1011), upon an interruption of a first communication session between the first communication terminal and a second communication terminal, information on interruption of a communication session relating to the interruption of the first communication session between the first communication terminal (1) and the second communication terminal (2) to a communication management device (3) distinct from the first communication terminal (1) and second communication terminal (2), the transmitted information on interruption of the first communication session comprising a command to restore the first communication session between the first communication terminal and the second communication terminal.

8. Communication management method implemented by a communication management device (3), the communication management method comprising:
in response to reception (1001), by the communication management device (3), of information on interruption of a communication session relating to an interruption of a first communication session between a first communication terminal (1) and a second communication terminal (2) distinct from said communication management device (3), said interruption information being received from the first communication terminal on occurrence of the interruption, the received information on interruption of the first communication session comprising a command to restore the first communication session between the first communication terminal and the second communication terminal,
transmission (1003) of a request (REQ1) to set up a second communication session to the second communication terminal (2), triggered by the received information on interruption of a communication session.

9. Communication management method according to the preceding claim, comprising, in case of failure to set up the second communication session between the communication management device (3) and the second communication terminal (2), reiterating (1004) the step of transmission (1003) of a request (REQ1) to set up a second communication session to the second communication terminal (2).

10. Communication management method according to either of Claims 8 and 9, comprising, on set up of the second communication session between the communication management device (3) and the second communication terminal (2), transmitting (1008) a request (REQ2) to set up a third communication session with the first communication terminal (1) triggering, on set up of the third communication session between the communication management device (3) and the first communication terminal (1), set up of a new first communication session (1009) between the first terminal and the second terminal (1, 2) by merging the second communication session and the third communication session that have been set up.

11. Method according to any of Claims 8 to 10, wherein information on interruption of a first communication session between the first communication terminal (1) and the second communication terminal (2) is received by the communication management device (3) via a data exchange network.

12. Method according to any of Claims 8 to 11, wherein the first communication sessions between the first communication terminal (1) and the second communication terminal (2) are video communication sessions.

13. Communication management device comprising a requester able to transmit a request (REQ1) to set up a second communication session to a second communication terminal (2), triggered by interruption information relating to an interruption of a first communication session between a first communication terminal (1) and a second communication terminal (2) and comprising a command to restore the first communication session, the interruption information having been received on the occurrence of the interruption by the communication management device from the first communication terminal, said communication management device being distinct from the first communication terminal (1) and second communication terminal (2).

14. Computer program comprising instructions for implementing the alerting method according to any of Claims 1 to 6 and/or the communication management method according to any of Claims 8 to 12, when this program is executed by a processor.

15. Non-transient computer-readable recording medium on which is recorded a program for implementing the alerting method according to any of Claims 1 to 6 and/or the communication management method according to any of Claims 8 to 12, when this program is executed by a processor.
